# EUROPÄISCHE PATENTANMELDUNG

(11) **EP 1 905 498 A1**
(43) Veröffentlichungstag der Anmeldung: **02.04.2008**
(21) Anmeldenummer: 06020176.1
(22) Anmeldetag: 26.09.2006
(51) Int. Cl.: B01D 29/39

(54) **Filtergewebeelement, insbesondere für einen Blattfilter**

(71) Anmelder: Sefar AG, 8803 Rüschlikon (CH)
(72) Erfinder: Forster, Othmar, 9410 Heiden (CH); Keller, Ivan, 9410 Heiden (CH)
(74) Vertreter: Wunderlich, Rainer

(57) **Zusammenfassung**

Die Erfindung betrifft ein Filtergewebeelement mit einer ersten Gewebeschicht (10) und einer zweiten Gewebeschicht (20), wobei die beiden Gewebeschichten (10,20) in parallel zueinander verlaufenden Verbindungsbereichen (5,5') so miteinander verbunden sind, dass zwischen den beiden Gewebeschichten (10,20) zumindest zwei parallel zueinander verlaufende Taschen (6,6') zur Aufnahme von Drainageelementen gebildet sind. Erfindungsgemäß ist vorgesehen, dass die beiden Gewebeschichten (10,20) in den Verbindungsbereichen (5,5') miteinander verwebt sind.

## Beschreibung

Die Erfindung betrifft ein Filtergewebeelement, insbesondere für einen Blattfilter, gemäß dem Oberbegriff des Anspruchs 1.

Ein derartiges Filtergewebeelement weist eine erste Gewebeschicht und eine zweite Gewebeschicht auf, wobei die beiden Gewebeschichten in parallel zueinander verlaufenden Verbindungsbereichen so miteinander verbunden sind, dass zwischen den beiden Gewebeschichten zumindest zwei parallel zueinander verlaufende Taschen zur Aufnahme von Drainageelementen gebildet sind.

Zur Filtration feststoffbeladener Flüssigkeiten ist die Verwendung von Blattfiltern bekannt. Ein solcher Blattfilter kann mit Filterblättern ausgebildet sein, die jeweils eine Vielzahl nebeneinander und parallel zueinander angeordneter, länglicher Drainageelemente aufweisen. Auf diesen nebeneinander angeordneten, länglichen Drainageelementen ist ein Filtergewebeelement aufgespannt. Dieses weist eine Vielzahl nebeneinander angeordneter, paralleler Taschen auf, wobei jeweils ein Drainageelement in einer der Taschen aufgenommen ist. Die Drainageelemente weisen jeweils zumindest einen Längskanal zum Ableiten der Flüssigkeit auf. Beispielsweise kann jedes Drainageelement im Querschnitt U-förmig ausgebildet sein.

Beim Betrieb des Filters wird eine in das Innere des Filtergewebeelementes gerichtete Strömung erzeugt. Die Flüssigkeit tritt durch die Wände der Taschen durch das Filtergewebeelement hindurch und wird entlang dem Längskanal des Drainageelementes abgeleitet. Zum Abführen der Flüssigkeit aus den Drainageelementen kann stirnseitig an diesen ein Sammelrohr vorgesehen sein.

Ein derartiges Filterelement ist beispielsweise aus der US 4,789,474 bekannt.

Für einen zuverlässigen Betrieb des Filters ist es erforderlich, dass die Taschen des Filtergewebeelementes präzise gefertigt und bemaßt sind. Sind die Taschen zu eng oder fehlerhaft positioniert, so kann das Filtergewebeelement nicht zuverlässig auf die Drainageelemente aufgezogen werden. Sind die Taschen hingegen zu weit, kann die Leistungsfähigkeit des Filters beeinträchtigt sein. Insbesondere überspannt das Filtergewebe in diesem Fall die Kanäle in den Drainageelementen nicht eben, sondern es wird bei der Erzeugung der einwärts gerichteten Strömung in den Kanal eingezogen. Im Extremfall könnte das Filtergewebe sogar an der Kanalinnenwand anliegen, so dass keine zuverlässige Drainage mehr gegeben ist.

Aus der US 4,789,474 ist es bekannt, die parallel zueinander verlaufenden Taschen für die Aufnahme der Drainageelemente durch Vernähen von Gewebeteilen herzustellen. Um hierbei die erforderliche Präzision einzuhalten, kann ein hoher Aufwand erforderlich sein. Insbesondere ist es erforderlich, das Gewebe während des Nähvorgangs exakt zu positionieren.

**Aufgabe** der Erfindung ist es, ein Filtergewebeelement, insbesondere für einen Blattfilter, anzugeben, das in Herstellung und Betrieb besonders wirtschaftlich und besonders zuverlässig ist.

Die Aufgabe wird erfindungsgemäß durch ein Filtergewebeelement mit den Merkmalen des Anspruchs 1 gelöst. Bevorzugte Ausführungsbeispiele sind in den abhängigen Ansprüchen angegeben.

Die Erfindung ist dadurch gekennzeichnet, dass die beiden Gewebeschichten in den Verbindungsbereichen miteinander verwebt sind.

Ein Grundgedanke der Erfindung kann darin gesehen werden, die Taschen für die Aufnahme der länglichen Drainageelemente nicht erst im Anschluss an die Gewebeherstellung durch nachträgliches Vernähen herauszubilden, sondern die Taschen bereits während des Webens der Taschenwandungen mittels eines Hohlwebeverfahrens voneinander abzuteilen. Insbesondere ist erfindungsgemäß das Filtergewebeelement, zumindest im Bereich der Taschen, einstückig gewebt und nicht durch nachträgliches Zusammenfügen mehrerer Gewebe gebildet.

Unter der Verwebung der beiden Gewebeschichten in den Verbindungsbereichen kann insbesondere verstanden werden, dass die beiden Gewebeschichten in den Verbindungsbereichen mit mindestens einem gemeinsamen Fadensystem verkreuzt sind. Bei diesem gemeinsamen Fadensystem handelt es sich vorzugsweise um ein Kettfadensystem. Für ein besonders wirtschaftliches Filtergewebeelement ist geeigneterweise genau ein gemeinsames Fadensystem in den Verbindungsbereichen vorgesehen.

Das erfindungsgemäße Filtergewebeelement mit den durch Verweben hergestellten Taschen erlaubt eine besonders kostengünstige Fertigung bei besonders hoher Präzision, da die Position der Taschen durch die Bindungspatrone definiert wird und keine aufwändige nachträgliche Positionierung von Gewebeschichten erforderlich ist. Eine hohe Fertigungsgenauigkeit ist wichtig, damit bei Verwendung von Drainageelementen, etwa U-förmigen Profilen, sowohl eine gute Einschiebbarkeit in die Taschen als auch eine ausreichende Gewebespannung gewährleistet sind. Bei ausreichend steifen Garnen ist es auch möglich, eine Drainage in den Taschen ohne Drainageelement bereitzustellen. Darüber hinaus hat sich gezeigt, dass die verwebten Verbindungsbereiche im Gegensatz zu Nähten besonders verschleißbeständig sind.

Erfindungsgemäß können die Taschen Stirnöffnungen aufweisen, die zur Drainage und insbesondere zum Einschieben der Drainageelemente dienen können. Besonders vorteilhaft ist es nach der Erfindung, dass im Bereich der Stirnöffnungen mindestens eine quer zu den Taschen verlaufende Haltelasche, insbesondere zur Befestigung des Filtergewebeelementes an einem senkrecht zu den Drainageelementen verlaufenden Sammelrohr, vorgesehen ist. Hierdurch kann das Filtergewebeelement in besonders einfacher und zuverlässiger Weise bezüglich der Drainageelemente festgelegt werden.

Die Wirtschaftlichkeit des erfindungsgemäßen Filtergewebeelementes kann dadurch erhöht werden, dass die Gewebelagenzahl im Bereich der Taschen größer, insbesondere doppelt so groß ist, wie in den Verbindungsbereichen. Insbesondere können Fadensysteme vorgesehen sein, die nur im Bereich der Taschen verlaufen, nicht hingegen in den Verbindungsbereichen. Vorzugsweise ist die Zahl der Kettfadensysteme in den Verbindungsbereichen geringer als im Bereich der Taschen, was insbesondere dann vorteilhaft ist, wenn die Verbindungsbereiche und die Taschen in Kettrichtung verlaufen. Verlaufen die Verbindungsbereiche und die Taschen in Schussrichtung kann die Zahl der Schussfadensysteme in den Verbindungsbereichen geringer sein als im Bereich der Taschen.

Ein besonders bevorzugtes Filterelement ist dadurch gekennzeichnet, dass es im Bereich der Taschen als doppellagiges Gewebe und/oder in den Verbindungsbereichen als einlagiges Gewebe ausgeführt ist. Gemäß diesem Ausführungsbeispiel können im Bereich der Taschen zwei Kettfadensysteme und zwei Schussfadensysteme vorgesehen sein, wobei das erste Kettfadensystem und das erste Schussfadensystem die erste Gewebeschicht bilden und das zweite Kettfadensystem und das zweite Schussfadensystem die zweite Gewebeschicht. In den Verbindungsbereichen hingegen sind lediglich ein Kettfadensystem und ein Schussfadensystem vorgesehen. Die quer zu den Taschen angeordneten Fadensysteme durchlaufen vorzugsweise sowohl die Bereiche der Taschen als auch die Verbindungsbereiche. Sie werden geeigneterweise in den Verbindungsbereichen zu einem einzigen System vereinigt und sind dort mit dem gemeinsamen Fadensystem verkreuzt.

Die Fertigungskosten können weiter dadurch verringert werden, dass die Verbindungsbereiche in Kettrichtung verlaufen. In diesem Fall sind auch die Taschen in Kettrichtung angeordnet.

Erfindungsgemäß ist es ferner, dass die Taschen in einem Endverbindungsbereich, in dem die beiden Gewebeschichten miteinander verbunden sind, insbesondere verwebt sind, stirnseitig abgeschlossen sind. Hierdurch kann verhindert werden, dass ungefilterte Trübe stirnseitig in die Drainageelemente gelangen kann. Für eine besonders hohe Wirtschaftlichkeit und Präzision ist auch dieser Endverbindungsbereich bevorzugt durch Verweben hergestellt. Grundsätzlich können die beiden Gewebeschichten im Endverbindungsbereich jedoch auch beispielsweise vernäht und/oder verklebt werden.

Insbesondere um die Zuverlässigkeit der Befestigung am Sammelrohr weiter zu erhöhen, ist es vorteilhaft, dass zwei Haltelaschen vorgesehen sind, die insbesondere zumindest annähernd deckungsgleich sein können. Bevorzugt ist es dabei, dass die erste Haltelasche mit der ersten Gewebeschicht zumindest ein gemeinsames Fadensystem aufweist und/oder dass die zweite Haltelasche mit der zweiten Gewebeschicht zumindest ein gemeinsames Fadensystem aufweist. Die beiden Haltelaschen können auf ihren den Taschen abgewandten Seiten, insbesondere lösbar, miteinander verbunden werden, wodurch ein Aufnahmekanal gebildet ist, in dem das Sammelrohr aufgenommen werden kann. Soweit eine Haltelasche mit der benachbarten Gewebeschicht ein gemeinsames Fadensystem aufweist, ist eine besonders zuverlässige webetechnische Verbindung zwischen den zum Halten vorgesehenen Gewebebereichen und den zum Filtrieren vorgesehenen Gewebebereichen gegeben, so dass ein besonders robustes Filtergewebeelement erhalten wird.

Ferner ist es vorteilhaft, dass die zumindest eine Haltelasche ein mehrschichtiges Gewebe aufweist, das durch zumindest eine Gewebefaltung gebildet ist, wobei das mehrschichtige Gewebe vorzugsweise vernäht, geklammert und/oder vernietet ist. Durch die durch Faltung erzeugte mehrschichtige Gewebeausführung sind besonders robuste Haltelaschen gegeben, welche die Haltefunktion besonders zuverlässig erfüllen können.

Ein besonders einfach konfektioniertes und daher wirtschaftliches Filtergewebeelement ist dadurch gegeben, dass das mehrschichtige Gewebe der Haltelasche jeweils zumindest eine Faltkante aufweist, die senkrecht zu den Verbindungsbereichen verläuft.

Ein besonders genau justierbares und somit zuverlässiges Filtergewebeelement ist dadurch gekennzeichnet, dass, insbesondere im Endverbindungsbereich, eine Versteifungstasche zur Aufnahme eines rechtwinklig zu den Taschen verlaufenden Versteifungselementes vorgesehen ist. Hierdurch kann das Filterelement auf seiner den Stirnöffnungen abgewandten Seite versteift und/oder gehaltert werden.

Eine besonders zuverlässige Filterfunktion bei zuverlässiger Trennung der Taschen kann nach der Erfindung dadurch erreicht werden, dass die gemeinsame Fadendichte, also die Zahl der Fäden pro Flächeneinheit, beider Gewebeschichten im Bereich der Taschen niedriger ist als in den Verbindungsbereichen. Ferner ist es nach der Erfindung vorteilhaft, dass die Fadenzahl, also die Zahl der Fäden pro Längeneinheit, der parallel zu den Verbindungsbereichen verlaufenden Fäden in den Verbindungsbereichen größer ist als in den einzelnen Gewebeschichten im Bereich der Taschen. Dies ist insbesondere dann vorteilhaft, wenn die Zahl der Gewebelagen in den Verbindungsbereichen geringer ist als im Bereich der Taschen, also quer zu den Verbindungsbereichen verlaufende Fadensysteme im Bereich der Verbindungsbereiche zu einem System vereinigt werden. In diesem Fall kann ein besonders homogenes Gewebe erhalten werden.

Nach der Erfindung kann auch ein Verfahren zum Herstellen eines erfindungsgemäßen Filtergewebeelementes vorgesehen sein, das sich dadurch auszeichnet, dass die beiden Gewebeschichten auf einer Webmaschine hergestellt werden und auf derselben Webmaschine in den Verbindungsbereichen miteinander verwebt werden. Hierdurch kann in besonders einfacher Weise ein Filtergewebeelement mit den genannten Vorteilen erhalten werden.

Die Erfindung wird nachfolgend anhand,bevorzugter Ausführungsbeispiele näher erläutert, die schematisch in den Figuren dargestellt sind. In den Figuren zeigen:
- Fig. 1: eine Seitenansicht eines erfindungsgemäßen Filtergewebeelementes;
- Fig. 2: eine vergrößerte Längsschnittsansicht des Filtergewebeelementes aus Fig. 1 im verschlossenen Fußbereich;
- Fig. 3: eine perspektivische Teilansicht des Filtergewebeelementes aus Fig. 1 im Kopfbereich zur Illustration der Haltelaschen; und
- Fig. 4: eine schematische Querschnittsansicht des Gewebes aus Fig. 1 im Bereich einer Tasche.

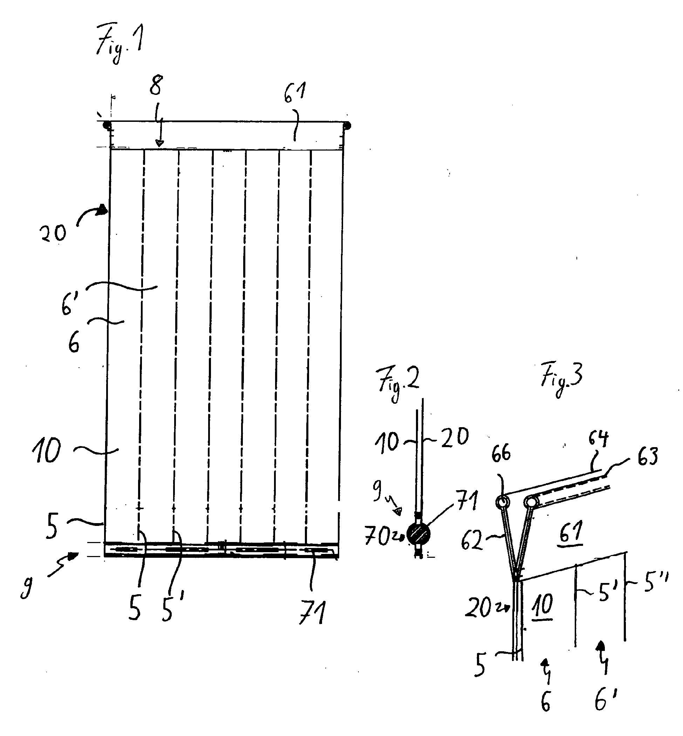

Ein Ausführungsbeispiel eines erfindungsgemäßen Filtergewebeelementes ist schematisch in den Figuren 1 bis 3 dargestellt. Das Filtergewebeelement weist zwei Gewebeschichten 10, 20 mit etwa rechteckigen Abmessungen auf, von denen in Fig. 1 nur die Gewebeschicht 10 erkennbar ist. Die im Wesentlichen gleich große Gewebeschicht 20 wird in dieser Figur von der Gewebeschicht 10 verdeckt.

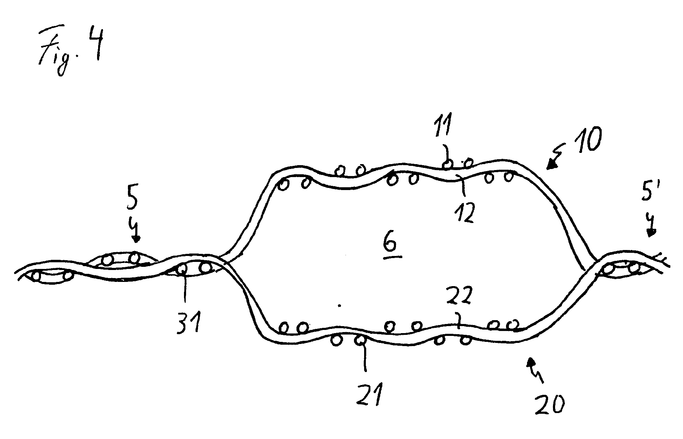

Wie insbesondere Figuren 1 und 3 zeigen, sind die beiden Gewebeschichten 10 und 20 in Verbindungsbereichen 5, 5', 5'' miteinander verwebt. Von den insgesamt acht in Fig. 1 vorgesehenen Verbindungsbereichen sind in Fig. 1 der Übersichtlichkeit halber nur drei mit Bezugszeichen markiert. Die Verbindungsbereiche 5, 5', 5'' verlaufen parallel zueinander und parallel zur längeren Längskante der rechteckig konfektionierten Gewebeschichten 10, 20. Die Verbindungsbereiche 5, 5', 5'' sind äquidistant angeordnet, wobei der äußerste Verbindungsbereich 5 unmittelbar an der Längskante der beiden Gewebeschichten 10, 20 verläuft.

Durch die Verwebung der beiden Gewebeschichten 10 und 20 in den Verbindungsbereichen 5, 5', 5'' sind zwischen diesen längliche Taschen 6, 6' gebildet, die zwischen den beiden Gewebeschichten 10, 20 parallel zu den Verbindungsbereichen 5, 5', 5'' verlaufen. Der Übersichtlichkeit halber sind lediglich zwei der insgesamt acht Taschen 6, 6' mit Bezugszeichen gekennzeichnet. Die Taschen 6, 6' dienen zur Aufnahme von in den Figuren nicht dargestellten, länglichen Drainageelementen, die in Fig. 1 von oben zwischen die beiden Gewebeschichten 10, 20 eingeschoben werden.

Wie insbesondere in den Figuren 1 und 2 zu erkennen ist, sind die beiden Gewebeschichten 10, 20 auch in einem Endverbindungsbereich 9 verbunden. Dieser Endverbindungsbereich 9 verläuft senkrecht zu den Verbindungsbereichen 5, 5', 5'' und den Taschen 6, 6' im Bereich einer der Querkanten der Gewebeschichten 10, 20 und schließt die Taschen 6, 6' auf einer ihrer beiden Stirnseiten ab. Auf ihren gegenüberliegenden Stirnseiten, die in Fig. 1 oben angeordnet sind, sind die Taschen 6, 6' offen und weisen Stirnöffnungen 8 auf. Im Endverbindungsbereich ist eine quer zu den Taschen 6, 6' verlaufende Versteifungstasche 70 ausgebildet, in der ein längliches Versteifungselement 71 angeordnet ist.

Wie insbesondere den Figuren 1 und 3 zu entnehmen ist, weist das Filtergewebeelement zwei Haltelaschen 61, 62 auf, die sich an die Taschen 6, 6' im Bereich ihrer Stirnöffnungen 8 anschließen. Diese Haltelaschen 61, 62 können zur Befestigung des Filtergewebeelementes an einer Filtereinrichtung dienen. Beide Haltelaschen 61, 62 weisen dieselbe rechteckige Grundfläche auf und verlaufen quer zu den Taschen 6, 6'. Die Haltelasche 61 stellt eine Fortsetzung der Gewebeschicht 10 dar und die Haltelasche 62 eine Fortsetzung der Gewebeschicht 20. Die Haltelaschen 61, 62 sind jeweils mit einem doppellagigen Gewebe ausgebildet. Zur Bildung dieses doppelschichtigen Gewebes ist die Haltelasche 61 an einer quer zu den Taschen 6, 6' verlaufenden Faltkante 63 und die Haltelasche 62 an einer quer zu den Taschen 6, 6' verlaufenden Faltkante 64 zur jeweils gegenüberliegenden Haltelasche hin umgeschlagen. Zwischen den beiden Gewebelagen jeder Haltelasche 61, 62 ist noch jeweils ein Versteifungselement 66 vorgesehen.

Eine schematische, vergrößerte Querschnittsansicht des Filtergewebeelementes der Figuren 1 bis 3 im Bereich einer Tasche 6 ist in Fig. 4 dargestellt.

Wie Fig. 4 zu entnehmen ist, sind die beiden Gewebeschichten 10, 20 im Bereich der Tasche 6 für sich genommen jeweils einlagig mit jeweils einem Kettsystem 11 beziehungsweise 21 und jeweils einem Schusssystem 12 beziehungsweise 22 ausgebildet. In seiner Gesamtheit betrachtet ist das Filtergewebeelement im Bereich der Tasche 6 somit doppellagig mit zwei Kettsystemen 11, 21 und zwei Schusssystemen 12, 22 ausgebildet. Zwischen den beiden Gewebeschichten 10, 20 ist die Tasche 6 angeordnet.

In den Verbindungsbereichen 5, 5' sind die beiden Gewebeschichten 10, 20 miteinander verwebt. Hierzu ist ein gemeinsames Kettsystem 31 vorgesehen, das mit dem Schusssystem 12 der ersten Gewebeschicht 10 und dem Schusssystem 22 der zweiten Gewebeschicht 20 verkreuzt ist. In den Verbindungsbereichen 5, 5' ist das Filtergewebeelement einlagig mit einem einzigen Kettsystem 31 und mit einem einzigen Schusssystem 12, 22 ausgebildet, wobei das Schusssystem durch Vereinigung des Schusssystems 12 der ersten Gewebeschicht mit dem Schusssystem 22 der zweiten Gewebeschicht in einer gemeinsamen Ebene gebildet ist.

In den Verbindungsbereichen 5, 5' und/oder im Bereich der Tasche 6 kann beispielsweise eine Köper-, Leinwand- oder Atlasbindung vorgesehen sein.

## Patentansprüche

1. Filtergewebeelement, insbesondere für einen Blattfilter, mit
einer ersten Gewebeschicht (10) und einer zweiten Gewebeschicht (20),
wobei die beiden Gewebeschichten (10, 20) in parallel zueinander verlaufenden Verbindungsbereichen (5, 5', 5'') so miteinander verbunden sind, dass zwischen den beiden Gewebeschichten (10, 20) zumindest zwei parallel zueinander verlaufende Taschen (6, 6') zur Aufnahme von Drainageelementen gebildet sind,
**dadurch gekennzeichnet,**
**dass** die beiden Gewebeschichten (10, 20) in den Verbindungsbereichen (5, 5', 5'') miteinander verwebt sind.

2. Filtergewebeelement nach Anspruch 1,
**dadurch gekennzeichnet,**
**dass** die Taschen (6, 6') Stirnöffnungen (8) aufweisen und dass im Bereich der Stirnöffnungen (8) mindestens eine quer zu den Taschen (6, 6') verlaufende Haltelasche (61, 62) zur Befestigung des Filtergewebeelementes an einem, insbesondere senkrecht zu den Drainageelementen verlaufenden, Sammelrohr vorgesehen ist.

3. Filtergewebeelement nach Anspruch 1 oder 2,
**dadurch gekennzeichnet,**
**dass** die Gewebelagenzahl im Bereich der Taschen (6, 6') größer, insbesondere doppelt so groß ist wie in den Verbindungsbereichen (5, 5', 5'').

4. Filtergewebeelement nach einem der vorstehenden Ansprüche,
**dadurch gekennzeichnet,**
**dass** es im Bereich der Taschen (6, 6') als doppellagiges Gewebe und/oder in den Verbindungsbereichen (5, 5', 5'') als einlagiges Gewebe ausgeführt ist.

5. Filtergewebeelement nach einem der vorstehenden Ansprüche,
**dadurch gekennzeichnet,**
**dass** die Verbindungsbereiche (5, 5', 5'') in Kettrichtung verlaufen.

6. Filtergewebeelement nach einem der vorstehenden Ansprüche,
**dadurch gekennzeichnet,**
**dass** die Taschen (6, 6') in einem Endverbindungsbereich (9), in dem die beiden Gewebeschichten (10, 20) miteinander verbunden sind, insbesondere verwebt sind, stirnseitig abgeschlossen sind.

7. Filtergewebeelement nach einem der Ansprüche 2 bis 6,
**dadurch gekennzeichnet,**
**dass** zwei Haltelaschen (61, 62) vorgesehen sind, wobei die erste Haltelasche (61) mit der ersten Gewebeschicht (10) zumindest ein gemeinsames Fadensystem aufweist, und/oder wobei die zweite Haltelasche (62) mit der zweiten Gewebeschicht (10) zumindest ein gemeinsames Fadensystem aufweist.

8. Filtergewebeelement nach einem der Ansprüche 2 bis 7,
**dadurch gekennzeichnet,**
**dass** die zumindest eine Haltelasche (61, 62) ein mehrschichtiges Gewebe aufweist, das durch zumindest eine Gewebefaltung gebildet ist, wobei das mehrschichtige Gewebe vorzugsweise vernäht, geklammert und/oder vernietet ist.

9. Filtergewebeelement nach Anspruch 8,
**dadurch gekennzeichnet,**
**dass** das mehrschichtige Gewebe der Haltelasche (61, 62) jeweils zumindest eine Faltkante (63, 64) aufweist, die senkrecht zu den Verbindungsbereichen (5, 5', 5'') verläuft.

10. Filtergewebeelement nach einem der vorstehenden Ansprüche,
**dadurch gekennzeichnet,**
**dass**, insbesondere im Endverbindungsbereich (9), eine Versteifungstasche (70) zur Aufnahme eines rechtwinklig zu den Taschen (6, 6') verlaufenden Versteifungselementes (71) vorgesehen ist.

11. Verfahren zum Herstellen eines Filtergewebeelements nach einem der vorstehenden Ansprüche,
**dadurch gekennzeichnet,**
**dass** die beiden Gewebeschichten (10, 20) auf einer Webmaschine hergestellt werden und auf derselben Webmaschine in den Verbindungsbereichen (5, 5', 5'') miteinander verwebt werden.
